# EUROPEAN PATENT APPLICATION

(11) **EP 1 257 109 A2**
(43) Date of publication of application: **13.11.2002**
(21) Application number: 02253267.5
(22) Date of filing: 09.05.2002
(51) Int. Cl.: H04L 29/06, H04L 12/56, H04N 1/393, H04N 1/41

(54) **Image communication gateway**

(30) Priority: 09.05.2001 JP 2001139383
(71) Applicant: Kizna Corporation, Delaware 19801 (US)
(72) Inventor: Myazawa, Takeo, Mitaka-shi, Tokyo 181-0013 (JP)
(74) Representative: Brown, Kenneth Richard

(57) **Abstract**

A system is provided which enables easy delivery of images to portable telephones. The system comprises a server, a gateway which converts the information of above-mentioned server into an interface matched to an Internet portable telephone, an image inpu interface which receives images from a digital camera and causes image data to be stored in an image memory, and a text input part which inputs text corresponding to these images and causes the text to be stored in a text memory. The images and text stored in memory are stored in association with each other. When the data of either one is acquired and referred to, it is possible to acquire data on the other one.

## Description

### BACKGROUND OF THE INVENTION

### FIELD OF THE INVENTION:

The present invention relates to an image communication server and image communication method which can deliver images simply to portable telephones or personal computers which are connectable to a computer network, including the Internet.

### DESCRIPTION OF THE RELATED ART:

Electronic mail is widely known as a typical message exchange means in a client server system.

Recently, portable telephones with Internet access functions appeared, and use is spreading rapidly. In the following description, this type of portable telephone is called an "Internet portable telephone".

The Internet portable telephone will now be briefly described. Unlike a conventional portable telephone, an Internet portable telephone allows not only voice calls but also convenient access to online services, including checking bank account balances and bank transfer information, restaurant guides, and telephone directory searches. Also via the Internet, electronic mail can be sent/received, and home pages supported by the Internet portable telephone can be viewed on this portable telephone itself.

The major features are as follows.
- In addition to "voice calls" using the portable telephone, many sites on the Internet can be accessed merely by using the keys of the Internet portable telephone. Services available with the Internet portable telephone are expanding in quick succession to make life easier, including mobile banking, ticket reservations, news flashes and restaurant searches.
- The data communication system of the Internet portable telephone is packet communication (9600 bps), where a fee is charged which is not based on communication time but on the data volume transmitted or received. So the user can take time to view information without concern for communication time.
- Internet portable telephone mail can be exchanged not only between Internet portable telephones but also over the Internet, so mail can be sent/received over the Internet even from outside homes. Because of the packet communication system, the fee for a short e-mail can be sent/received for 1 - 3 Yen.
   The screen of the Internet portable telephone corresponds to the small screen of a personal computer. So the user can connect the telephone to the Internet and to various information services, and can access desired information anytime and anywhere.
   The major services provided by the Internet portable telephone are as follows.
- Internet portable telephone message service
   If message reception is requested from a site where Internet portable telephone message services are provided, the desired information is automatically sent to the portable telephone. For example, such information services as news flashes and weather forecasts can be received without concern for the communication time.
- Internet portable telephone mail service Mail can be exchanged not only between Internet portable phones but Internet mail can also be exchanged. In the case of the Internet portable telephone, the portable telephone number of the Internet portable telephone becomes the electronic mail address.
- Internet portable telephone Internet browsing The Internet portable telephone allows viewing Internet home pages created for Internet portable telephones. Not only sites which provide commercial services for Internet portable telephones, but also personally created Internet portable telephone-supported home pages can also be viewed via the Internet portable telephone.

To exchange Internet mail and view home pages on a personal computer, a predetermined setup is required, and this operation is difficult. Since the Internet portable telephone originally has an electronic mail address and has a built-in browser to view home pages, troublesome setup is unnecessary. The feature of the Internet portable telephone is that not only conventional Internet portable telephone services but also Internet portable telephone-supported home pages on the Internet can be viewed at will.

In a message service, desired information is automatically received if registered in the message service of each site. Messages include the requested message, which requires registration in advance, and a free message. Both are automatically received just like receiving electronic mail.

The Internet portable telephone is convenient because various Internet information services can be accessed without using such computer equipment as a personal computer and PDA (Personal Data Assistant: portable information terminal).

As explained above, in addition to normal personal computers, Internet portable telephones are also connected to the Internet. However, there is a big difference between personal computers and portable telephones in regard to hardware performance, when viewed from the perspective of the server and it cannot handle both of them in exactly the same way. For example, the normal personal computer has 800 x 480 display elements, but the number of such elements of a portable telephone is vastly smaller. In addition, there is a big difference in the colors which can be displayed. As a result, content creation is separated according to content for personal computers and that for portable telephones, and appropriate information is provided to each device respectively.

However, it takes extra effort to take the same content and create separate versions for personal computers and for portable telephones, and there are problems with management and control. To make the content commonly usable among the server, personal computers, and portable telephones, it is desirable that the format be converted as appropriate based on the display capability of the receiving unit. In particular, even if it is not possible to apply this to all content, it would be desirable for comparatively simple content to be sharable between personal computers and portable telephones through a simple method.

### SUMMARY OF THE INVENTION

An object of the present invention is to provided an image communication server and image communication method which makes it easy to exchange images between servers, clients, and Internet portable telephones.

The image communication server according to the present invention is one which transmits images to clients through a computer network and comprises an image input part, a memory for storing the images received by above-mentioned image input part, and a gateway which switches alternatively between an interface for normal computers and an interface for Internet portable telephones which are the recipients of the above-mentioned images, and which processes the above-mentioned images to match the display capacity of the above-mentioned Internet portable telephones.

The image communication method according to the present invention comprises the following steps: first step: acquire image; second step: upload acquired image to server; third step: receive transmission request from client; fourth step: determine whether the source of the transmission request is a normal computer or an Internet portable telephone; fifth step: in the case that the source of the transmission request is a normal computer, transmit the requested image; sixth step: in the case that the source of the transmission request is an Internet portable telephone, convert the image to match the display capability of the source of the transmission request; and, seventh step: transmit the converted image.

### BRIEF DESCRIPTION OF THE DRAWINGS

Fig. 1 is an overall configuration diagram of a system according to embodiment 1 of the invention;
Fig. 2 is an operational flow chart of a system according to embodiment 1 of the invention;
Fig. 3 is an overall configuration diagram of a system according to embodiment 2 of the invention;
Fig. 4 is an operational flow chart of a system according to embodiment 2 of the invention;
Fig. 5 is a block diagram of the server and client in this system;
Fig. 6 is a block diagram of the wireless gateway;
Fig. 7 is an explanatory diagram of the overall processing of this system;
Fig. 8 is a flow chart of client processing in this system;
Fig. 9 is a flow chart of server processing in this system;
Fig. 10 is a flow chart of the processing of another client in this system;
Fig. 11 is a flow chart of the security processing of this system;
Fig. 12 is an example of an image displayed according to the message board system;
Fig. 13 is an example of an image displayed on an Internet portable telephone;
Fig. 14 is an example of another image displayed according to the message board system;
Fig. 15 is an example of another image displayed according to the message board system;
Fig. 16 is a conceptual drawing of this system;
Fig. 17 is an explanatory drawing of the overall processing of this system; and
Fig. 18 is an example of an image displayed according to the message board system.

### DESCRIPTION OF THE PREFERRED EMBODIMENTS

### Embodiment 1 of the Invention.

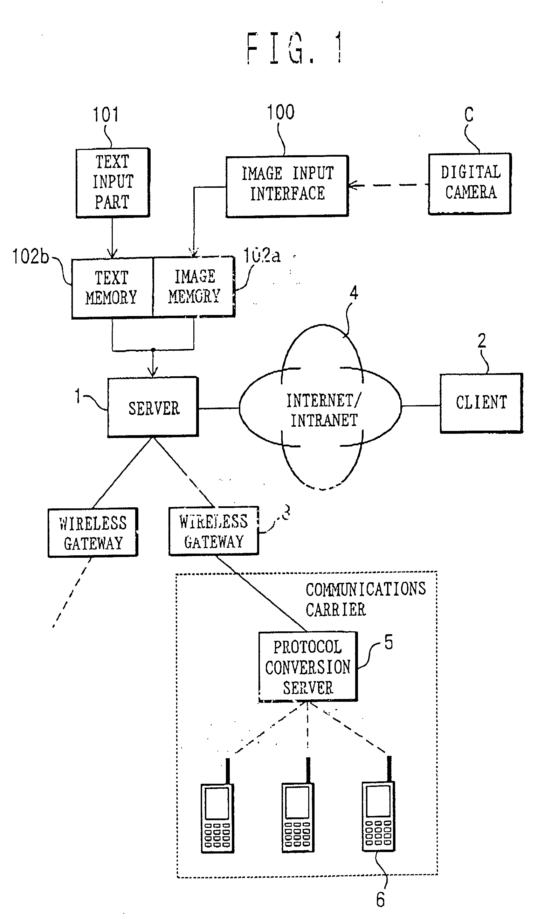

Fig. 1 is an overall configuration diagram of the system. Client 2 can access server 1 via Internet/intranet 4. server 1 has stored in advance in an external memory device the application software for this system (Java Applets). When the client accesses the server, client-use application software is downloaded, and the system becomes usable. Meanwhile, Internet portable telephone 6 (or a beeper) can access wireless gateway 3 via protocol conversion server 5, which is equipment of the communications carrier, and can also access server 1. Detailed explanations of these aspects are provided later.

Image input interface 100 obtains images from an image acquisition means, such as digital camera C, a scanner, or other device, and stores the image data in image memory 102a. Meanwhile, the text corresponding to this image is inputted through text input part 101 and stored in text memory 102b. Text input part 101 is typically a keyboard or touch panel, but it is not limited to those. Instead of directly inputting at the text input part 101, previously created text may be inputted by methods such as "copy and paste," etc. In addition, images and/or text may be transmitted from client 2 to server 1 and stored in memories 102a and 102b. The images and text stored in memories 102a and 102b are stored in association with each other. It is possible to acquire either one of the data and, and by accessing it, to obtain the other data. In addition, it is possible when transmitting image data to prepare data in the optimal form depending on the display capability of the receiving side. Detailed explanations of these aspects are provided later.

The system of Fig. 1 (in particular, server 1, image input interface 100, text input part 101, and memories 102a and 102b) can function as all-purpose photo-boards. In other words, server 1 can be used as a common display panel and, if a user uploads images to server 1, any other user can view those images on his own personal computer or portable telephone. Moreover, when uploading images, one can readily catalog images (content) common to all devices in server 1, without worrying about the display capacity of the recipient. This system can be positioned as an inexpensive, fast information transmission medium. For example, the system can be applied to tourist information systems based on the recording of tourist destination images which change daily, to product guide systems based on the recording of product images and prices which change daily, and to personnel recruiting systems based on the recording of candidate photos and "self introductions" which change daily.

A method of accessing content on the Internet from each portable telephone (including PHS) will now be briefly described.

At the moment, the following four types of methods are used. All of these services are accessed by HTTP on the Internet, but information sent via HTTP is described differently.
(1) [i-Mode system] described in i-Mode supported HTML
(2) [J-SkyWeb system] described in J-SkyWeb supported HTML
(3) [WAP/HDML system] described in HDML
(4) [P mail DX system] described in P mail DX text

The i-Mode system and the J-SkyWeb system can be described in HTML just like a regular web page, but the type of tags used in HTML are limited. Therefore the web page described in these systems can be accessed by the browser running on a regular personal computer. The WAP/HDML system and P mail DX system are similar to HTML since tags are embedded in the text, but uses a unique description method designed especially for portable telephone services.

All the above four systems can implement the text-based message system of the present embodiment since these systems can use HTTP as the transfer protocol (that is, service can be provided by Java Servlets), and have little difference in functions.

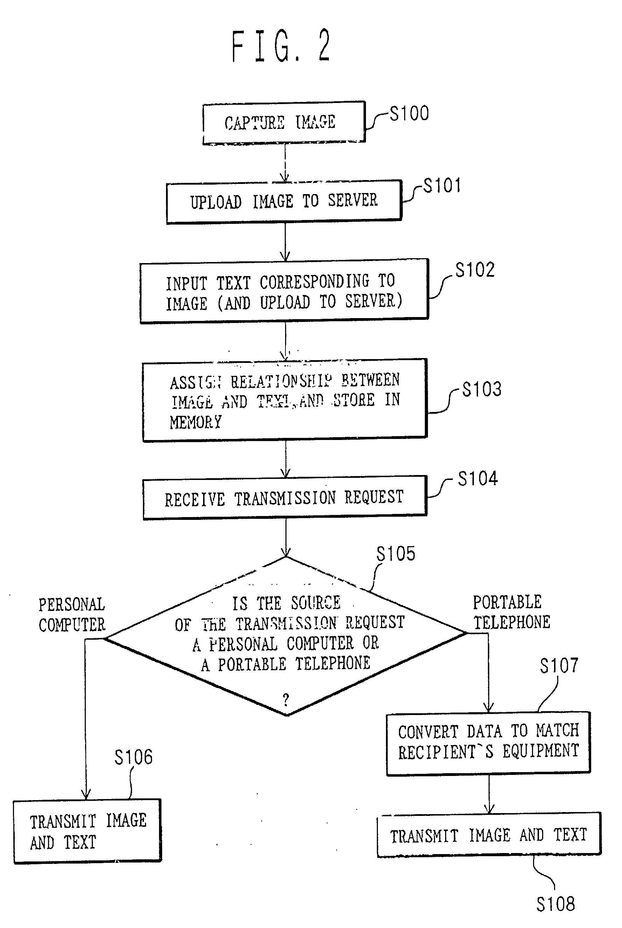

The following is an explanation of the system, based on the flow chart of Fig. 2.
S100: Images are acquired using digital camera C.
S101: The acquired images (for example, images showing the appearance of tourist destinations, images of people, images of products, etc.) are uploaded to server 1 through image input interface 100. specifically, the acquired image data is stored in image memory 102a.
S102: The text corresponding to the acquired images is inputted using text input part 101, etc. Alternatively, text stored in advance is uploaded to
server 1. For example, in the case of tourist destination images, comments such as "The cherry trees are in full bloom," could be inputted; in the case of images of people, a description of the person or a promotional pitch about him or her could be inputted; and, in the case of images of products, their prices and the effective period for the pricing could be inputted. Text is stored in text memory 102b.
S103: The text is associated with the images stored in memories 102a and 102b. In other words, linking information is prepared, so that from one of the two, the other can be accessed. In cases where images and text are transmitted to the client in separate steps, the above indicated linking information is important.

As above, by readying images and text in the server, they can then be provided to clients.

Next, will be described the steps for transmitting (delivering) the prepared images and text to personal computers and/or portable telephones based on the same Fig. 2.
S104: Server 1 receives a transmission request from a client.
S105: A determination is made as to whether the source of the transmission request is a personal computer or a portable telephone. S106: When the transmission request source is a personal computer, because the transmission request source has sufficient display capability, the requested images and text are transmitted as is. S107: When the transmission request source is a portable telephone, the data (primarily images) are converted to match the display capability of the transmission request source. For example, instead of the image itself, an icon-type image of it is prepared and transmitted. In general, icon images are smaller than the original images. The size of the icon data can be made smaller by decreasing the resolution of the image data of the original, and further increasing the compression ratio of image data compression. What size level to make the image data for an icon (number of picture elements [pixel count]) is determined based on the relationship between the size of the icon displayed on the screen and the display capability of the screen. Alternatively, for example, an image for portable telephone use may be prepared in advance, the data size of which is smaller than the data of the original image. What size level to make the data size (pixel count) is determined based on the display capability of the portable telephone screen. Also, the color data of the image may be compressed, based on the color display capability of the portable telephone screen. For example, if the screen is monochrome, color information is not necessary.
S108: Transmit the converted images and text.

According to embodiments of this invention, while making the content common to both types of recipient, delivery of images to personal computers and portable telephones can be done through simple operations. Moreover, in doing so, since the images in each case are converted to ones that are optimized according to the display capability of the receiving side, excellent images can be provided to recipients without putting a burden on them. This system provides a so-called all-purpose photo board, which enables ready exchange of images between a server, clients, and/or Internet portable telephones.

Furthermore, in the above-mentioned embodiment, the image was inputted from a digital camera, but it need not be limited to that. For example, it is also possible to receive an image attached to an email from a user or to fetch an image designated thereby and store it in memory. It is also acceptable for a server to receive an instruction from a user and for the specified database and/or server, based on the instruction from the user, to generate an image (by means of CAD, for example) and store this in memory. It is also possible to search the Internet and to acquire the specified image and store it in memory. In uploading images, in addition to including the above methods, the embodiments include a broad range of general image acquisition methods.

### Embodiment 2 of the Invention.

The above-described embodiment of the invention was one which uploaded the image of a digital camera to the server (image memory). The system of this embodiment of the invention is one which samples the images of a camera connected to the server and stores them in an image memory.

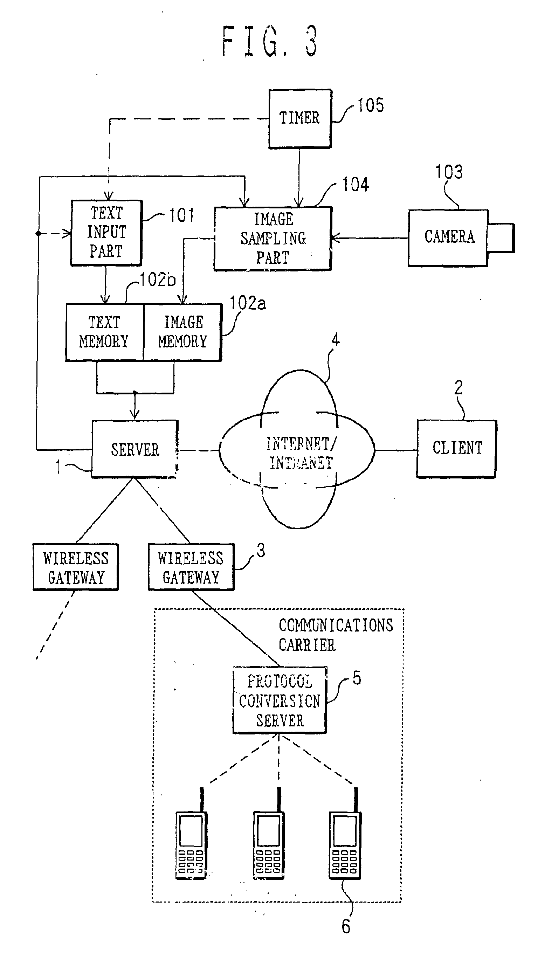

Fig. 3 is an overall configuration diagram of this system. In Fig. 3, server 1, client 2, wireless gateway 3, Internet/intranet 4, protocol conversion server 5 and Internet portable telephone 6 (or beeper) are the same as those shown in Fig. 1.

Image sampling part 104 samples appropriate images from the image acquisition means such as camera 103 and stores image data in image memory 102a. Meanwhile, the text corresponding to the image is inputted from the text input part 101 and is stored in the text memory 102b. Text input part 101 is typically a keyboard or touch panel, but it is not limited to these. Instead of direct inputting through text input part 101, previously created text may be inputted through methods such as copy and paste. In addition, images and/or text may be transmitted from client 2 to server 1 and stored in memories 102a and 102b. The images and text stored in memories 102a and 102b are stored in association with each other. If the data of either one is acquired, then, by accessing that, the data of the other one can be acquired. In addition, when image data is transmitted, data is prepared which is in the ideal form depending on the display capability of the receiving side. A detailed explanation of these aspects will be provided later.

Image sampling part 104 samples images according to a schedule determined in advance by timer 105, or image sampling may be done according to commands from server 1 (commands can also be received via Internet 4). For example, in the case that camera 105 is fixed and is recording a fixed location, images of the location are acquired at fixed time intervals or at predetermined time intervals. For example, images of the specified location may be acquired based on directions from the client.

Text input part 101 receives comments, etc. about the sampled images. The text which is inputted may, for example, be explanations about the sampled images, the time of the sampling (receiving information from timer 105), text stored in advance in server 1, text which server 1 searched from the Internet based on key words such as the sampling time, location where camera is installed, etc.

The system of Fig. 3 (especially, server 1, text input part 101, memories 102a and 102b, image sampling part 104) can function as an all-purpose monitoring apparatus. In other words, by installing camera 103 in the desired location, an image of that location can be acquired at any time. This system, for example, can be applied to child-monitoring systems where, by installing a camera in a child care center or one's own home, a parent can check on their child's situation via their portable telephone screen anytime and anywhere, or to a monitoring system for checking images from a crime prevention camera via a portable telephone screen, etc. In the former case, images could be sampled periodically during the time the youngster is kept at the care center or images could be sampled at any time in response to a request from the portable telephone. Alternatively, as a means for the childcare center to stay in contact with the parent or guardian, images could be sampled through the actions of someone at the childcare center and those images could be sent to the portable telephone of the parent.

If a system camera were installed at a tourist destination, people about to set out on a trip could obtain, for example, images of the tourist destination and could thus learn from their own home the current situation of a tourist destination they had visited in the past.

The images obtained with this system are not the kind of processed images one sees on television or video, but are raw images, so that one can see the current situation of the place and the object being recorded, just as they are.

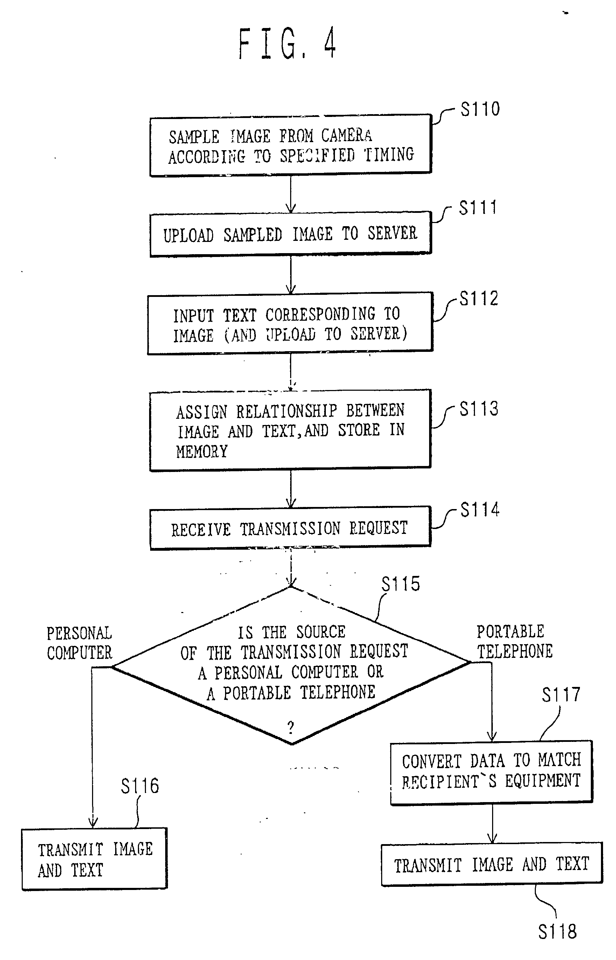

Based on the flow chart of Fig. 4, operation of the system will be described.
S110: Sample images from camera 103 at the desired timing. Sampling is executed according to a schedule set in advance by timer 105. Alternatively, sampling may be executed according to a command from server 1 (a command can also be received via Internet 4.) For example, when the user wants to see an image, he first sends a sampling command to server 1 from a portable telephone. Receiving that, server 1 samples the image and also transmits the sampled image to the user.

Moreover, in the case of a single user, there is no problem, but it is necessary to consider how to control this in the case of multiple competing users. For example the following ways of handling this could be considered:
- First come, first served. In other words, the first person to gain access is given the right of control.
- The control right is given to the user who has the longest time of use. Users can be encouraged to use the system for long periods. In this case, a "control right acquisition" notice may be displayed in the user's screen, indicating his ranking, as, for example, "Your connection time now ranks #2. You are close to gaining the control right." Specifically, control signal receiving part 11 monitors the usage situation, and while assigning control to users with long "usage situations," also provides the above-mentioned kind of notification to the second position and lower users.
- The control right is assigned by "lottery." The "drawing of the lots" is done, for example, by control signal receiving part 11.
- The control right is assigned by bidding. For example, "People wishing control rights please send the amount of your bid to a certain electronic address within a certain number of minutes." could be displayed on the user's screen and they could be urged to bid. Specifically, when several users compete, control signal receiving part 11 notifies all users of that fact and of the above-indicated message content. When the bids have been submitted, the control signal receiving part 11 assigns control to the user who submitted the most attractive bid terms.
- The control right is assigned with priority to pre-registered members.
S111: The sampled image is uploaded to server 1. Specifically, the acquired image data is stored in image memory 102a.
S112: The text corresponding to the acquired image is inputted using text input part 101, etc. Alternatively, text prepared in advance may be uploaded to server 1. Text is stored in text memory 102b.
S113: The image is associated with text stored in memories 102a and 102b. In other words, linking information is provided so that from either one, the other can be accessed. When images and text are transmitted to the client during different steps, above-mentioned linking information becomes important.

Through the above steps, images and text are readied in the server, and they can later be provided to clients.

Next, the steps in transmitting (delivering) the prepared images and text to personal computers and/or portable telephones is described based on the same Fig. 4.
S114: Server 1 receives a transmission request from a client. This transmission request may be a request simply to transmit a sampled image, or it may be a request to do sampling and transmit that newly sampled image, or etc. in the case of the former, multiple users share multiple images, while in the latter case, a different image is sent to each user. Of course, both of these types may be combined. First, the user checks the image according to the command of the former case, and afterward, specifying the prescribed place and/or timing, the desired images are obtained (for example, initially receiving an overall image of a location and next specifying the desired location and timing.)
S115: Determine whether the transmission request source is a personal computer or a portable telephone.
S116: When the transmission request source is a personal computer, the transmission request source has sufficient display capability, so the requested images and text are transmitted as is.
S117: When the transmission request source is a portable telephone, data (primarily images) is converted to match the display capability of the transmission request source. For example, instead of the image itself, an icon-type image of it is prepared and transmitted. In general, icon images are smaller than the original images. The size of the icon data can be made smaller by decreasing the resolution of the image data of the original and by further increasing the compression ratio of image data compression. What size level to make the image data for an icon (pixel count) is determined based on the relationship between the size of the icon displayed on the screen and the display capability of the screen. Alternatively, for example, an image for portable telephone use may be prepared in advance, the data size of which is smaller than the data of the original image. What size level to make the data size (pixel count) is determined based on the display capability of the portable telephone screen. Also, the color data of the image may be compressed based on the color display capability of the portable telephone screen. For example, if the screen is monochrome, color information is not necessary.
S118: The converted images and text data are transmitted.

### <Detailed Description of Processing>

The system and method according to embodiments of this invention are as described above. Next, will be described the details of the processing to achieve the embodiments of the invention.

In order to send and receive messages which include images in real time, the system of the embodiments of this invention is an "icon driven" server/client system (the term "message" here includes images and text, as in the above-indicated embodiments 1 and 2 of this invention. And the same below.) The point which is different from conventional systems is that the addressing of messages in done intuitively and directly by means of dragging and dropping icons. The system according to the embodiments of this invention provides a new method for communication and collaborative-work in Internet/intranet communities.

This system can be used very easily. The user merely accesses the server, then boards, described later, such as a message board, white board, chess board, and maps and images, can be used any time, and can be used to write a desired message and share this message with others, by dragging and dropping icons on a board, over the Internet.

The features of this system are: easy installation, easy use and easy customization. Also this system is used more easily than any other communication, collaboration and joint operation software, including a message board, labeling software, white board, chat and electronic mail.

To use this system, the server must be a CGI-supported Web server, and Java also must be supported. The client side must be a Java-supported Web browser and must support the virtual machine/run-time environment of Java.

This system has the following major functions.
- Message creation function
   This is a function to create a message to send to a destination. For example, if an icon to transmit a message is clicked, a dialog box is displayed on the screen, and this icon and the message are linked by writing a message in this dialog box. The dialog box may be displayed not only when an icon is clicked, but also when the icon is dragged and dropped.
- Message addressing function
   This is a function to determine the destination to send the message. In conventional electronic mail software, the message destination must be input by characters. In this system, the area on a screen corresponding to each client is defined and controlled, and it is judged which area an icon is dragged and dropped, that is, which destination the message is directed.
- Security function
   This is a function to control access to an icon and/or a message. This function grants permission to read, move, correct or delete an icon and/or a message. For example, anyone can read the message of an icon placed in a public space, but only the specified user can read an icon placed in a private space.
- Broadcast function
   This is a function to send a message to all users, without specifying a specific destination.
- Association function
   This is a function to set a link to related home pages, and to set and display such attributes as emergency, sold out, discount, and new product.
   This embodiment will now be described with reference to accompanying drawings.

Fig..5 is a functional block diagram depicting the general configuration of the server machine 1 and the client machine 2 used for this system. The server machine 1 comprises a message transfer section 11 which transfers a received message when necessary, a transmission/reception section 12 for communicating with the client machine, a message board screen creation section 13 which creates a screen of the message board based on the received message, and a display section 14 which receives the output of the screen creation section 13 and displays the screen. The client machine 2 comprises a transmission/reception section 21 for communicating with the server machine, a message creation section 22 which creates a transmission message, a message board screen creation section 23 which receives the transmission message from the message creation section 22, receives the reception message from the transmission/reception section 21, and displays these messages on the message board, and a display section 24 which receives the output of the screen creation section 23 and displays it on the screen.

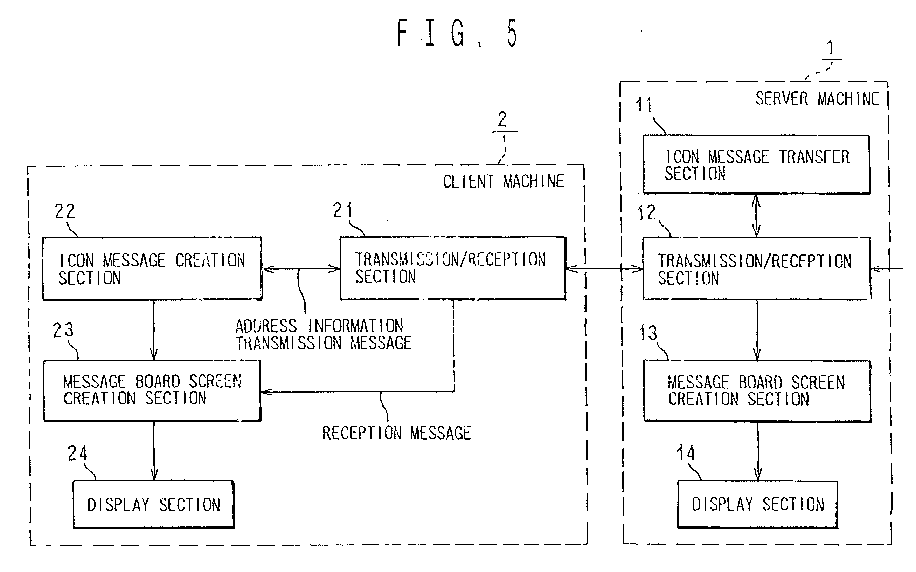

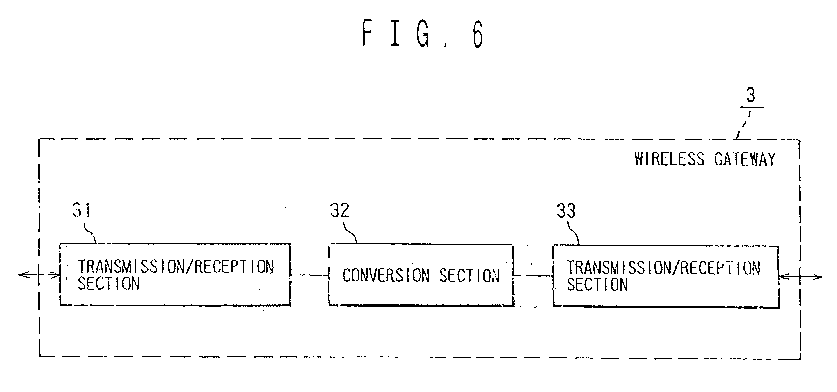

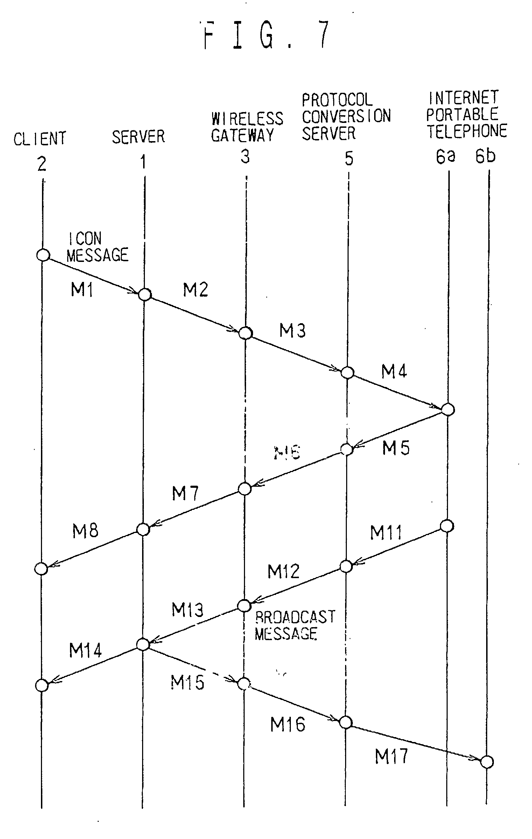

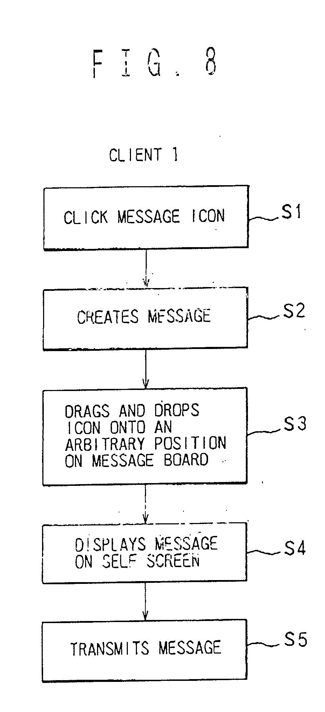

Fig.6 is a functional block diagram of a wireless gateway 3 which performs 2-way conversion of the interface for a personal computer and the interface for the Internet portable telephone to be used for this system. The wireless gateway is an interface conversion device for the Internet portable telephone which performs wireless communication. This device comprises a transmission/reception section 31 for communicating with the server machine 1, a transmission/reception section 32 for communicating with the protocol conversion server of the communication carrier, and a conversion section 32 which performs 2-way conversion of the interface for a personal computer and the interface for the Internet portable telephone. The conversion section 32 converts the display screen interface for a personal computer to the interface for the Internet portable telephone or vice versa. Compared with the display capability of the personal computer, the display capability of the Internet portable telephone is much less, so necessary information is processed according to the display capability of the Internet portable telephone. For example, the graphic displays of "rice ball icon" and "sandwich icon" are replaced with the characters "rice ball" and "sandwich". Therefore the wireless gateway 3 comprises a data base, which is not illustrated, for storing information on the correspondence between graphics and characters. Or this data on correspondence is received from the server 1. Another example is that the current position displayed on a map is converted to longitude/latitude information and/or the address display information by characters. In this case, a database for storing the correspondence between positions on maps, and longitude/latitude information and/or address display information is provided in advance.

Fig.7 shows an exchange of messages between the server 1, the client 2 and the Internet portable telephones 6a and 6b. When the client 2 creates a message, the message M1 is transmitted to the server 1, and is also displayed on the self screen. The server 1 identifies the destination of the received message M1, and transmits it to the destination-Internet portable telephone 6a (M2 to M4). When the Internet portable telephone 6a creates a reply message, the replay message is transmitted to the client 2 (M5 to M8). If the message is a broadcast message, the message M11, transmitted from the Internet portable telephone 6a, is also transmitted to all the other clients 2 and 6b (M12 to M17). In this way, message communication via the server 1 is possible among all the clients 2 and 6a and 6b.

Fig.8 shows the processing flow in the client 2 which transmits a message. When the user clicks a message icon (S1), a message creation dialog is displayed. The user can create an arbitrary message here (S2). The user drags and drops the icon on to an arbitrary position of the message board (S3). The message can be transmitted by this operation. The client displays the message on the self screen (S4), and also transmits the message (S5).

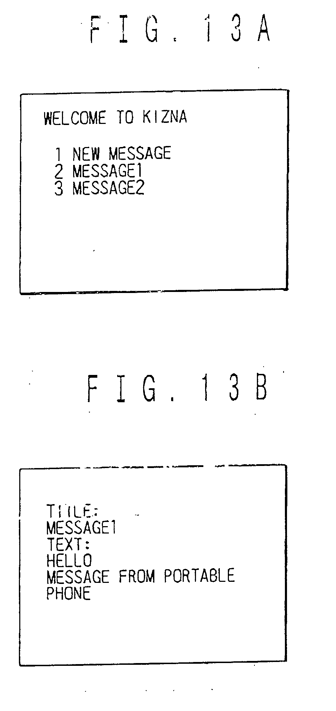

The screens shown in Fig.13 (a) and (b), for example, are displayed on the display screen of the Internet portable telephone 6. Fig.13 (a) shows a screen when the user has accessed the server 1. The menu 1 is for creating a new message to transmit. The menus 2 and 3 are for reading the message 1 or 2, which is addressed to the user or is for broadcasting. Fig. 13 (b) shows a screen when the menu 1 is selected and the message 1 is displayed.

The processing flow in the Internet portable telephone 6 will now be described with reference to the flow chart in Fig.8. At first, the user selects menu 1 "new message" (S1), then the message creation dialog is displayed. The user can create an arbitrary message here (S2). The user specifies the transmission destination of the created message (S3). At this time, the message can be transmitted without any relationship to an existent message, or can be transmitted in association with an existent message (e.g. as a reply to a message). The Internet portable telephone 6 displays a message on the self screen (S4), and also transmits the message (S5).

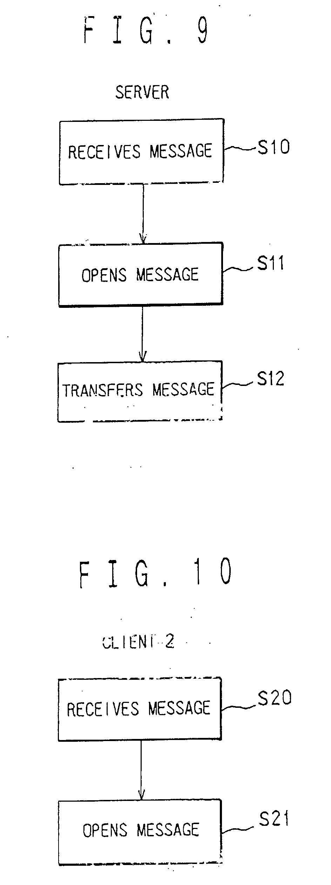

Fig.9 shows a processing flow in the server. When the server receives a message (S10), the server opens the message (S11), and stores it to the self memory. And the server transfers the message to a predetermined destination (S12).

Fig. 10 shows a processing flow in the client which receives a message. When the client receives a message from the server (S20), the client opens the message (S21), and displays the message on the message board thereof. In the screen in Fig.13, for example, the Internet portable telephone 6 creates a new menu 4 and displays the menu.

By the processings in Fig.8 to Fig.10, the message written to a client is immediately reflected on the screens of the other clients. In this way, the transmission/reception of a message between arbitrary clients can be synchronously known in real-time. Management is easy since all the information is collected in the server.

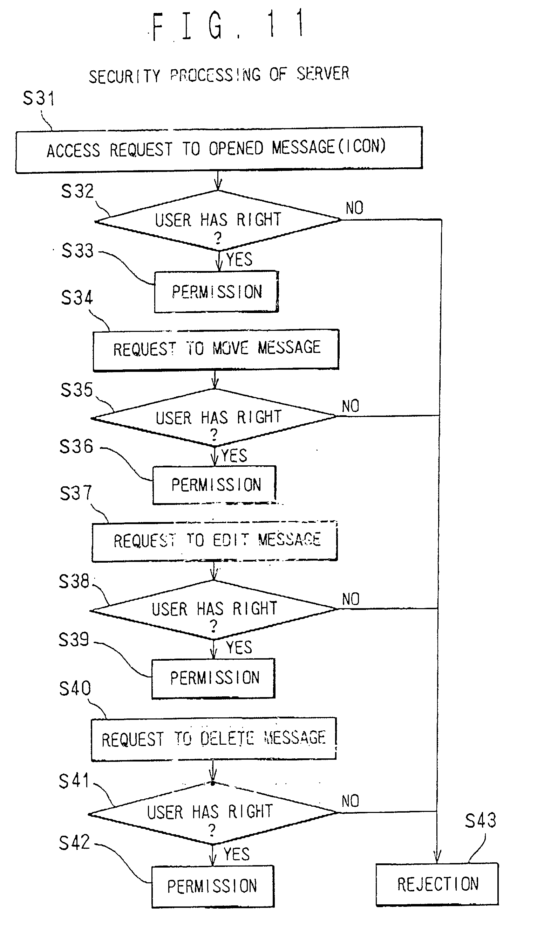

Fig. 11 shows a security processing flow of the server. When an access request for an opened message (icon) is received (S31), the server checks whether the requesting user has the right (S32), permits access if the user has the right (S33), and rejects the request if not (S43). Similar processing is also executed when moving a message (that is, changing the transmission destination address), editing a message, and deleting a message are requested (S34 - S42). For example, if this system is a bulletin board which anyone can access, accessing and moving are permitted to anyone. But editing and deleting are permitted only to the user who transmitted the message or to the administrator.

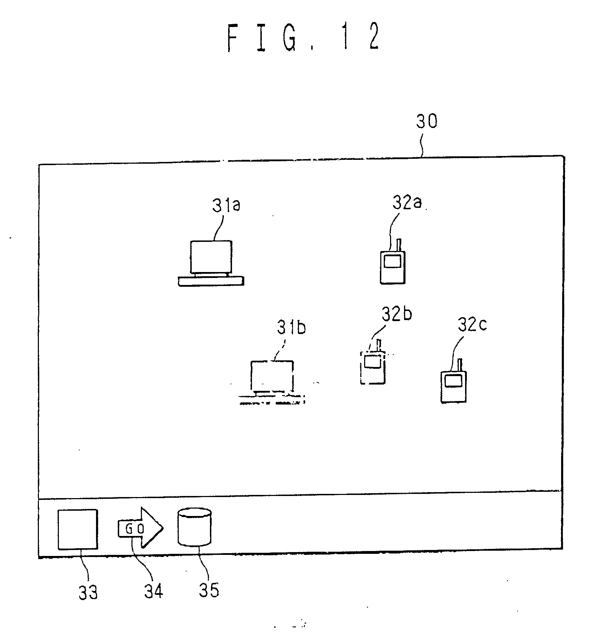

Fig. 12 shows an example of a message board screen of this system. The message board 30 and examples of the message, 31 and 32, to be displayed here, are displayed on the screen. The icons 33, 34 and 35 at the bottom of the screen are a message creation icon 33, GO icon 34, whicn creating a link to a related home page, and a trash can icon 35, which deletes à message respectively. The icons 31a and 31b indicate messages from clients of a personal computer, and icons 32a and 32c are messages from Internet portable telephones. By changing the type of icon, a message from a personal computer client and a message from an Internet portable telephone can be easily identified on the message board 30. The server 1 selects a type of icon by checking whether the message is from the wireless gateway 3.

Based on this drawing, tne operation method of this system will be described. To transmit a message, the icon 33 is clicked and a message is created. And the icon 33 is dragged and dropped on to an arbitrary position of the message board 30. Then the message is opened and can be read as seen in 31 and 32. The status of this screen is the same for all clients, as the flow in Fig.7 shows. Therefore, the user can read all the messages on the screen on the self client machine. Unlike the broadcasting of conventional electronic mail, this system can send a message to all participant users without specifying destinations. Also, operation using icons is very intuitive and easy to understand, and is very easy to use.

The case of the Internet portable telephone will now be described. When the Internet portable telephone 6 accesses the server 1 via the protocol conversion server 5 and the wireless gateway 4, the screen shown in Fig. 13 (a), for example, is displayed, where messages on the message board can be known. The user can read any message in a range permitted by the terms of security.

Security problems are not a very serious issue on this message board. Here any user can create, paste or delete a message. Of course the level of security can be increased so that only a specified individual (e.g. administrator) can move and delete a message (see Fig. 11).

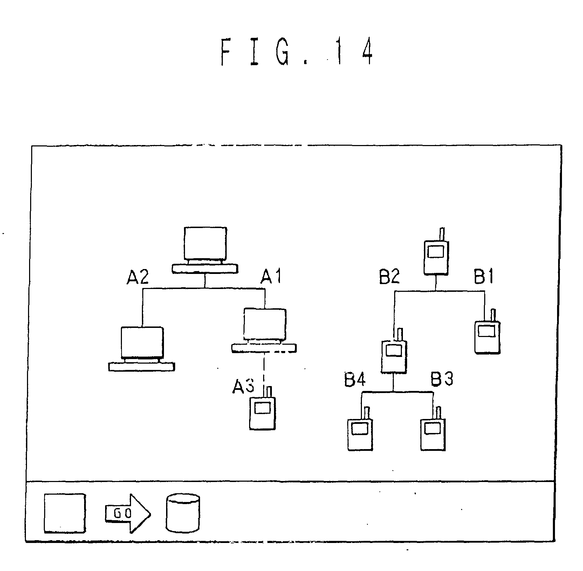

The relationship between messages may be indicated on the message board. For example, as Fig. 14 shows, lines are drawn between the response to a message, and a plurality of related messages are displayed as a group. Also, as Fig. 14 shows, symbols A1, A2, . . . may be added to the branches of a message. By referring to these symbols, a desired message can be directly opened. Such a reference method is particularly useful with the Internet portable telephone. On the display of the Internet portable telephone, messages are displayed in a hierarchical structure, where it takes time to reach the message to be read if the message is deep in the hierarchy. If reference symbols are added, as shown in Fig. 14, then the message can be directly selected and read using a symbol as a search key.

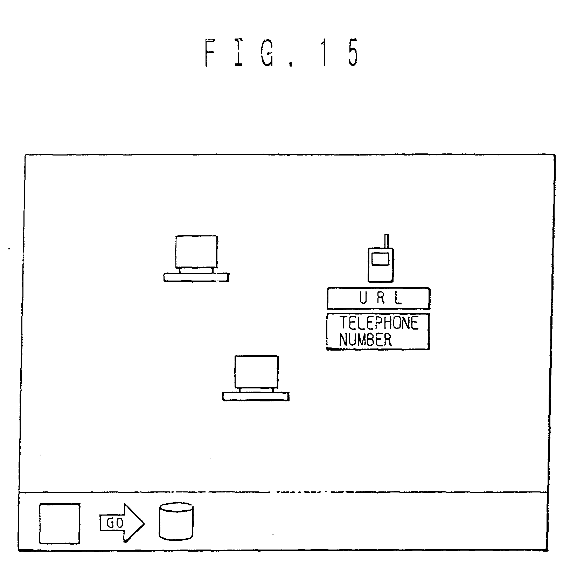

Also the URL or telephone number of the user who transmitted the message may be displayed with the icon of the message, as Fig. 15 shows. By this display, the user who transmitted of the message can be specified. The telephone call may be made to the telephone number by double clicking the icon.

In the main system/method described above, the images prepared by the user are included in the icons. The following is an explanation of this point.

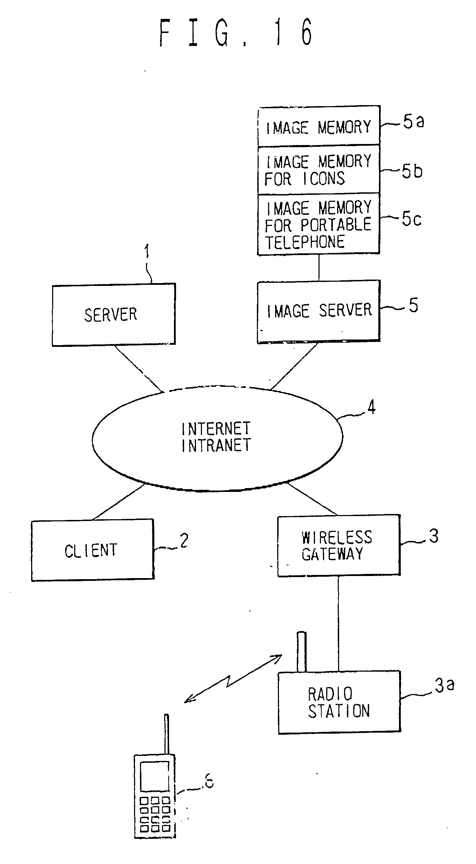

Fig. 16 is a block diagram of this system. Fig. 16 corresponds to Fig. 1 and Fig. 3 described above. In Fig. 16, image server 5, image memory 5a connected thereto, image memory for icons 5b, image memory 5c for portable telephones are newly provided. Image server 5 receives from client 2 image data alone or together with messages and stores it in image memory 5a. Image server 5 converts the received image data into images for use as icons and images for portable telephone use and stores these respectively in icon use image memory 5b and portable telephone use memory 5c. Note that in Fig. 16, image server 5 is provided separately from server 1, but the invention is not limited to that. Server 1 may be configured to perform the function of image server 5.

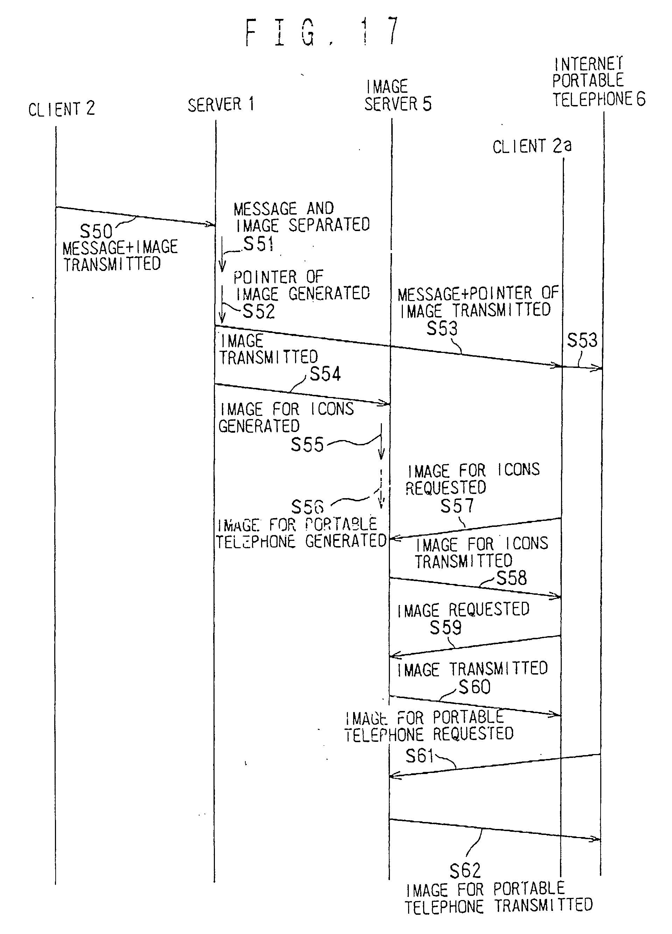

The processing steps will be explained using the flow chart of Fig. 17.

A message and image data are transmitted from the client 2 to the server 1 (S50). In the server 1, the message and image data are separated (S51). The separated message is distributed to each client, as described above (see Fig. 17). In the present embodiment, however, not only the message but also the image data and/or the pointer (e.g. URL), which indicates the position of the image for icons and the image for a portable telephone on the network, are transmitted to each client. In other words, the pointer of the image is generated (S52), and the message and the pointer of the image are transmitted to the client 2a and the Internet portable telephone 6 (S53). It is predetermined that the image data will be stored to the image server 5, and the pointer is the URL of the image server 5. The image data is specified by the name or address of the transmitter or title, so the URL includes the name and address of the transmitter and title, for example. The pointer of the image includes information indicating the storage location of the original image, information indicating the storage location of the image for icons, and information indicating the storage location of the image for a portable telephone. This information is not always transmitted together. For example, only the storage location of the image for a portable telephone may be transmitted to a portable telephone.

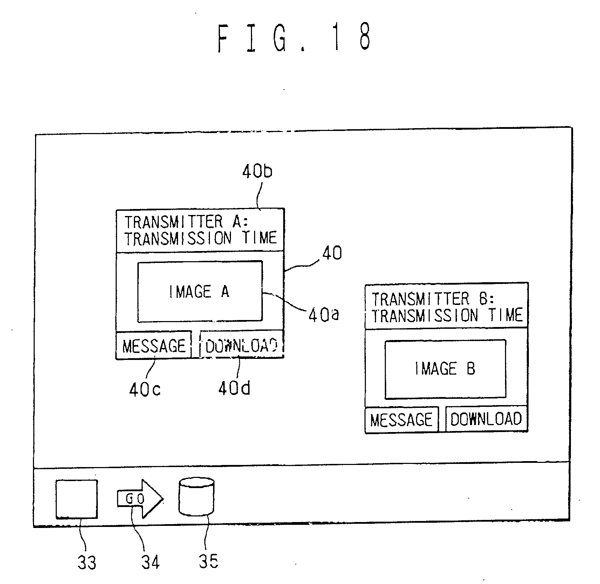

The image data is transmitted from the server 1 to the image server 5 (S54). The image server 5 stores the received image data to the image memory 5a, generates the image data for the icons and image data for a portable telephone from the received image data (S55, S56), and stores the image data to the image memory for icons 5b and the image memory for a portable telephone 5c respectively. The image data for icons is incorporated into the icon 40 of the message, as shown in Fig. 18. The image for icons is generally smaller than the original message. So it is preferable to decrease the size of the original image data by lowering the resolution of the data and increasing the compression rate of image compression. The size (number of pixels) of the image data for icons is determined depending on the relationship between the size of the icon displayed on the screen and the display capability of the screen. The image data for a portable telephone is generally smaller than the original image as well. So, just like the case of icons, the size of the data is decreased. The size (number of pixels) of the image data for a portable telephone is determined depending on the display capability of the screen of the portable telephone. Also, depending on the color display capability of the screen of the portable telephone, the color data of the image is compressed. For example, if the screen of the portable telephone is monochrome, color information is unnecessary.

When the message and the pointer of the image are transmitted to the client 2a, the client 2a requests the image for icons to the image server 5 (S57). The client 2a accesses the image server 5 using the pointer of the image received in S53. Then the image server 5 transmits the image for icons to the client 2a (S58). And the client 2a incorporates the received image for icons to the icon 40.

To obtain the original image, the user clicks on the "Download" button shown in Fig. 18. Then the client 2a transmits the image request to the image server 5 (S59), and the image server 5 transmits the original image to the client 2a (S60). And the client 2a displays the received image and stores the image to the local hard disk.

When the message and the image pointer are displayed on the Internet portable telephone 6, the Internet portable telephone 6 requests the image for portable telephone to the image server 5 (S61). The image server 5 transmits the image for portable telephone to the Internet portable telephone 6 (S62). Then the Internet portable telephone 6 displays the received image on its screen.

Fig. 18 shows an example of the screen of the client 2 in the fourth embodiment. The icon 40 of the message is displayed, where the icon 40 includes the image 40a, and also includes the display 40b to identify the transmitter, a message button 40c and the download button 40d. The message can be received by clicking the message button 40c. The original image can be downloaded by clicking the download button 40d.

The message transmission procedure will now be briefly described. At first the message creation icon 33 is clicked. Then the dialog box for inputting an image is displayed, and the message is input there. To transmit an image, the image button is clicked in order to display the dialog box for inputting an image. The image file is selected in this dialog box. When the dialog box is closed, the icon is displayed, so this icon is dragged and dropped onto a predetermined location. The image included in the icon may be created by the client 2, who is the transmitter, or may be obtained from the image server 5 using the image pointer received from the server 1.

According to the system/method of the fourth embodiment of the present invention, an image can be transmitted along with a message. Since the image to be transmitted is included in the icon, the receiver can know the content intuitively. Unlike conventional electronic mail, messages can be easily exchanged among a plurality of users. Operation is also easy by using a drag and drop operation of icons.

The present invention is not restricted to the above embodiments, and various modifications are possible within a scope of the invention stated in the Claims, and, needless to say, these variant forms are included in the scope of the present invention.

In this description, means does not always mean a physical means, but includes the case when the functions of each means are implemented by software. The functions of a means may be implemented by two or more physical means, or the functions of two or more means may be implemented by one physical means.

## Claims

1. An image communication server for transmitting images to a client via a computer network, comprising:
an image input part;
a memory for storing the images received by said image input part; and
a gateway for switching alternatively between an interface for normal computers and an interface for Internet portable telephones, these computers and telephones being the recipients of the above-mentioned images, and for processing the above-mentioned images to match the display capacity of said Internet portable telephones.

2. The image communication server according to claim 1, further comprising an image-capturing means, and wherein said image inputting means includes a sampling part for sampling the images from said image-capturing means and storing them in said memory.

3. The image communication server according to claim 2, further comprising a timer having a sampling schedule set up in advance, and wherein said sampling part performs sampling based on said timer.

4. The image communication server according to claim 2, wherein an image request is transmitted from the Internet portable telephone of the user, and said sampling part samples the images upon receiving this image request, and the sampled images are transmitted to said user.

5. The image communication server according to claim 1, further comprising a text input part, and wherein linking information is stored in said memory to associate the input text with images, and said linking information is transmitted together with said images and said text information.

6. The image communication server according to claim 1, wherein said gateway includes an image server for storing images, and said image server comprises an image memory for storing images and an icon image memory for storing images converted for icon use; and
wherein said image server, upon receiving said images, stores said images in said image memory and also converts said images into images for icon use and stores them in said icon image memory, generates a pointer for these images and sends said pointer to a client together with said images for icon use.

7. The image communication server according to claim 6, wherein said image server receives an image transmission request from a client based on said pointer transmitted and, based on the request, reads the corresponding image from said image memory and transmits it to the client.

8. The image communication server according to claim 6, wherein said pointer includes at least one of information showing the storage location of the original image, information showing the storage location of the icon image, and information showing the storage location of the image for portable telephone use.

9. The image communication server according to claim 1, comprising:
an image transmission part comprising a camera as said image input part, an image memory as said memory, a plurality of modems connected to a transmission line, and an image transmission control part for transmitting image data of said image memory to a user upon receipt of an image transmission request from said user via one of said plurality of modems; and
an accounting part for monitoring the establishment of communication between said user and said image transmitting part, measuring the communication time and/or communication data volume, and based on that result, calculating a fee for information provision and billing the fee to the user in addition to communication fees.

10. The image communication server according to claim 9, further comprising:
a control signal receiving part for receiving from said user control signals for said camera; and
an operating part for causing said camera to operate upon receipt of said control signal from said control signal receiving part;
wherein when a plurality of users compete for control, said control signal receiving part executes the control of the user having the longest usage time.

11. The image communication server according to claim 10, wherein said control signal receiving part communicates to said user a control right acquisition notice.

12. The image communication server according to claim 9, further comprising:
a control signal receiving part for receiving from said user a control signal for said camera; and
an operating part for causing said camera to operate upon receipt of said control signal from said control signal receiving part;
wherein, when a plurality of users compete for control, said control signal receiving part prompts said plurality of users to submit bids and executes control based on the result of the bidding.

13. A method for image communication comprising:
a first step of acquiring an image;
a second step of uploading the acquired image to the server;
a third step of receiving a transmission request from client;
a fourthstep of determining whether the source of the transmission request is a normal computer or an Internet portable telephone;
a fifth step of transmitting the requested image in the case that the source of the transmission request is a normal computer,;
a sixth step of converting the image to match the display capability of the source of the transmission request in the case that the source of the transmission request is an Internet portable telephone,; and
a seventh step of transmitting the converted image.

14. The method for image communication according to claim 13, further comprising the steps of:
uploading to the server text corresponding to the acquired image; and
preparing linking information to associate the uploaded image with the text;
wherein in at least one of said fifth step or said seventh step, said linking information and/or said text is transmitted together with said image.

15. The method for image communication according to claim 13, wherein in said sixth step, an image is generated with the resolution of said image reduced.

16. The method for image communication according to claim 13, wherein in said sixth step, an image is generated with the color information of said image reduced.

17. The method for image communication according to claim 13, wherein either said fifth step or said seventh step comprises the steps of:
generating an icon image of said image;
generating a pointer for said image;
transmitting said pointer together with said icon image; and
receiving an image transmission request based on said pointer transmitted and reading out and transmitting the corresponding image, based on that request.

18. A computer program for controlling the operation of an image communication server according to claim 1, said program comprising program code means adapted to control the server so as to perform the image communication method according to claim 13.
